# EUROPEAN PATENT SPECIFICATION

(11) **EP 2 691 619 B1**
(45) Date of publication and mention of the grant of the patent: **18.05.2016**
(21) Application number: 12716485.3
(22) Date of filing: 29.03.2012
(51) Int. Cl.: F01N 3/20, F01N 13/18

(54) **A BELLOWS FOR INTERNAL COMBUSTION ENGINES AND A METHOD TO MANUFACTURE SAID BELLOWS**
BALGEN ENTKOPPLUNGSELEMENT FÜR BRENNKRAFTMACHINEN UND VERFAHREN ZUM ERSTELLEN EINEN BALGEN ENTKOPPLUNGSELEMENT
SOUFFLET POUR MOTEUR À COMBUSTION ET PROCÉDÉ DE FABRICATION DU SOUFFLET

(30) Priority: 30.03.2011 FI 20115304; 30.03.2011 FI 20115303
(43) Date of publication of application: 05.02.2014
(73) Proprietor: Wärtsilä Finland Oy, 65380 Vaasa (FI)
(72) Inventor: SOLLA, Anu, CH-8400 Winterthur (CH); WIDJESKOG, Klaus, FI-65739 Jungsund (FI)
(74) Representative: LEITZINGER OY
(86) International application number: PCT/FI2012/050311
(87) International publication number: WO 2012/131165

(56) References cited:
- EP-A2- 1 126 141
- WO-A1-2009/045708
- WO-A2-2007/019551
- DE-A1-102006 036 741
- US-A1- 2005 242 577

## Description

### Object of the invention

An object of the present invention is a bellows with catalyst for internal combustion engines. Another object of the invention is a method and a system relating said bellows.

### Prior art

The invention relates specifically to emission reduction of large internal combustion engines, especially of type diesel. These are widely used on both mobile offshore applications as well as on immovable onshore applications, like for instance ships and diesel power plants respectively. As the regulations for emissions are getting ever tighter and green values are emphasized, the need for new methods for emission reduction is increasing.

One of the major techniques of controlling and reducing emissions of internal combustion origin is to use catalytic converters. They are based on using catalysts which promote chemical reactions in which toxic by-products of incomplete combustion are converted to less-toxic substances. As it comes to reduction of NOx (nitrogen oxides) emissions, the SCR-type (selective catalytic reduction) plays the major role in the field. The SCR method is based on converting NOx into diatomic nitrogen (N2) with the aid of a catalyst and reductants, such as ammonia and urea. The reductant is added to a stream of exhaust gas and absorbed onto a catalyst.

When applying catalyst solutions on internal combustion engines, one of the problems causing limitations on usability is the demand of space for necessary equipment. Restrictions set both by layout and available total space hamper the use of otherwise suitable solutions. Such an insuperable problem often arises when trying to mix reductants with adequate distance before the catalyst elements. Urea or other reducing agent should namely be injected upstream the catalyst as close to the internal combustion cylinder as possible in order to obtain a residence time long enough for a proper decomposition of urea droplets and boosting the catalyst.

In prior art document WO 2009045708 (A1) is presented an exhaust aftertreatment system including a first exhaust tube or assembly having an upstream inlet for receiving engine exhaust from an internal combustion engine, and a second exhaust tube or assembly having a downstream outlet for discharging the exhaust. The assembly carries the exhaust to a downstream aftertreatment element for treating the exhaust, which is for example an SCR (selective catalytic reduction) catalyst and/or a DOC (diesel oxidation catalyst) and/or a DPF (diesel particulate filter).

In prior art document DE102006036741 (A1) is presented an exhaust gas line system for multi-cylinder internal-combustion engine, which has exhaust gas line sections combined by exhaust gas compensator such that flow channels and longitudinal chamber directly surrounding flow channels are both retrofitted.

### Objective and solution of the invention

An objective of the invention is to provide a solution by which the above-mentioned prior art problems and shortages could be avoided in an effective and economical manner. In order to achieve this objective, a method according to the presently specified invention is characterized by what is set forth in the characterizing clause of claim 1. In addition, a few preferred embodiments of the invention are presented in the dependent claims. On the other hand, the characterizing features of an arrangement implementing the method of the invention are set forth in the characterizing clause of claim 5. A few preferred embodiments of such an arrangement are further presented in the dependent claims.

The invention now provides a simple and compact solution for the problem explained above. According to the invention, an arrangement is proposed where the bellows is further arranged between the cylinder head and exhaust pipe and substantially redesigned and additionally adapted for injection of the reductant to the exhaust gas stream, thus taking action for preliminary catalyst activity.

According to the invention, the new bellows is modified in that the surface area exposed to exhaust gases is firstly multiplied by several measures and further coated with suitable catalytic substances for both preventing clogging or such like behaviour of the reductant on said surfaces and performing preliminary catalytic reactions. Secondly, suitable means are arranged for injection of reductant into the exhaust gas flow within the bellows right after exit from the combustion chamber. By using this kind of modified bellows equipment with the combination of coated catalytic surfaces and injection of the reductant, the process of selective catalytic reduction takes its first step already inside the bellows. In this way, the chain of reactions towards a conversion of NOx into diatomic nitrogen N2 expedited and emissions further diminished.

As it comes to the injection of the substance referred here as reductant, it should be emphasized that the term reductant is intended to cover not only reductant agents aimed solely for the catalytic reactions, but also other substances for promoting in general the operation of the bellows and the reduction of emissions of the exhaust gas. For instance such as exhaust gas, air, water and regeneration gas be used as such reductants. The term reductant covers naturally combinations of the kind substances as well. Metal bellows equipments have actually been used as such already for quite a large number of various applications within internal combustion engines. However, their purpose of use has been restricted merely on mechanical functions such as taking care of heat elongation and movements, vibration issues, serviceability, tolerances etc.

Now instead, according to the present invention, the shell section of the bellows is reshaped such that it has preferably a plurality of recesses and ridges in the direction of expansion and contraction. This in turn increases the total surface area of the shell. The same kind of shaping can be applied as well on micro scale on these surfaces. That is to say, the contact surface of the inner surface structures of the shell are arranged to have suitable type of wrinkles or cockles or alike. A kind of relief surface is thus formed on the sheet materials. Or the sheet material can be made creped, so to speak. Further increase in total surface area can be obtained also by arranging some of the sheets to have openings through, or mesh type of layers can be used. This also increases the number of various passages the exhaust gases can flow through and the residence time is further extended.

As it comes to the coating the redesigned inner surfaces of the metal bellows with suitable catalytic substances, prior art techniques can well be used. These are such as spray techniques e.g. wet spraying/dipping of washcoat. However, according to most preferable embodiment of the invention, coating technique of type thermal spraying is utilized for making the coating. Thermal spraying provides namely a fairly quick and effective method for coating a substrate of this kind. When using thermal spraying catalyst powder is atomized in flame at high temperatures and directed at the surface to be coated. Thereby it forms a lamella type structure on the substrate surface. Since the coating is physically bonded to the substrate surface, the adhesion of coatings into the surface improves substantially compared to conventional techniques.

### Advantages provided by the invention

The invention offers several benefits and improvements in comparison to prior art type solution both in terms of compact structure and improvements on emission reduction. The primary objective of achieving enhanced catalyst reaction is now attainable with both small-sized and technically rather simple and cost effective means. The main benefits gained by the invention are based among others on the following facts.

First of all the arrangement accomplished as an implementation of the method as set forth in the claims substantially facilitates an early enough executed injection of reductant, preferably urea into the gas stream. Advantage is gained in the enhanced decomposition of the urea droplets, which further promotes the catalytic reactions later on.

Additionally the conversion of nitrogen oxides into diatomic nitrogen N2 is improved further by the coated layers of catalytic nature applied on the newly designed abundant inner surfaces of the bellows. First catalytic reactions take place already within the bellows accessory. According to a preferable embodiment of the invention, the total surface area of the inner surfaces of the bellows is multiplied with various measures. This additionally boosts the bellows positive effect on the catalytic phenomena.

The surface can be increased both by increasing the number of separate layers provided with a suitable perforations or alike and by applying a relief surface of suitable type. These measures will be presented later in more detail along with descriptions of the embodiments of the invention.

Worth noticing is also the fact that the present invention provides the bellows with the additional catalytic functions without any additional space requirements. The invention is also most applicable on existing engine applications thus providing an excellent opportunity to modernize existing installations with such a simple and small scale retrofitting arrangement. A clear improvement in emission controlling would, thus, become attainable with most modest investment.

The use of thermal spraying for the application of coating material makes it, in turn, possibly to utilize efficient and simple machining techniques for the manufacture of the bellows and thus brings forth an opportunity to produce both an economic and efficient bellows equipment for performing the above explained preliminary catalytic actions. Further advantages produced by the invention will become apparent as well.

### List of figures

The invention and a variety of its applications will be described in more detail in the following with reference to the accompanying drawings, in which:
- Figure 1: shows a general end view of a conventional multi-cylinder combustion engine including a metal bellows between cylinder head and exhaust pipe for each cylinder,
- Figure 2: shows as a side view a partial longitudinal section of a metal bellows according to the present invention,
- Figure 3: shows in a close-up a longitudinal partial section A of a metal bellows according to the present invention in Figure 2,
- Figure 4a: shows in a side view a metal bellows according to one embodiment of the invention,
- Figure 4b: shows in a side view a metal bellows according to another embodiment of the invention,
- Figure 5: shows in a side view yet another embodiment of the metal bellows with an additional connection,
- Figure 6: shows also in a side view one more embodiment of the metal bellows with another kind of an additional connection,
- Figures 7a and 7b: show in a perspective view a metal bellows with flanges set on both ends.

### Detailed description of the invention

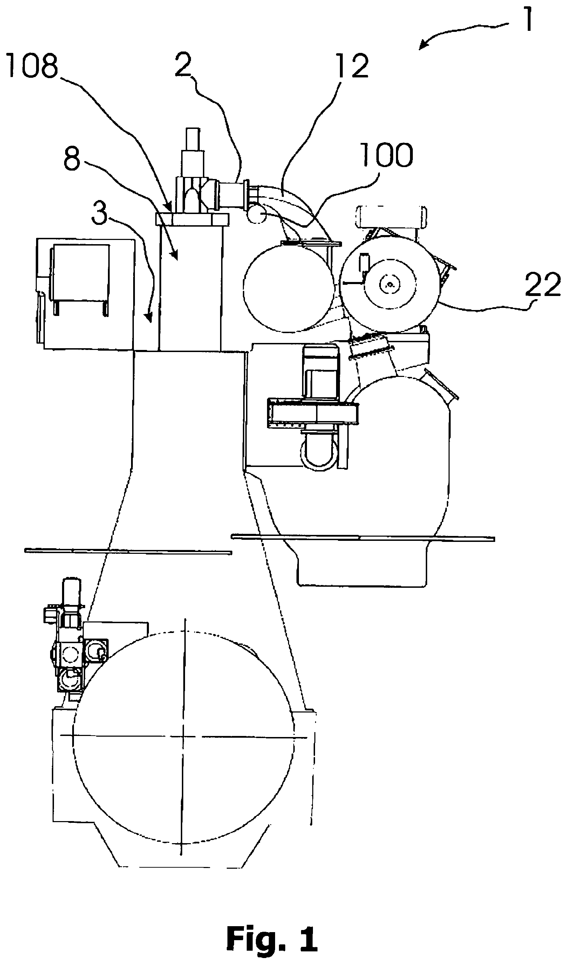

Fig. 1 shows in a highly schematic end view a typical bellows arrangement used with internal combustion engines. Here a two-stroke engine 3 is equipped with bellows 2 arranged between a combustion chamber 8 which located here inside a cylinder head 108, and exhaust pipe 12 prior to turbocharger 22.

Normally the purpose of use of the bellows is mechanical of nature, like managing heat elongations and vibrations etc. The size of the bellows equipment 2 is as such rather limited and its design is normally fairly simple and straightforward with cylindrical type of outer dimensions and a sleeve type form.

It should be emphasized that the present invention can be applied basically on all kinds of internal combustion engines. As it comes to piston engines, both two-stroke and four-stroke engines can be used. Diesel cycle, Otto cycle and other applications are all suitable. The fuel type can vary as well, for instance heavy fuel oil, diesel oil and biofuels, as well as gas type fuels such as natural gas etc.

According to the present invention, the bellows equipment 2 has now been redesigned and totally new duties have been allocated for it. The bellows 2 according to the invention can still locate in exhaust gas line either upstream such a supercharger 22 or between the turbines of a two-stage supercharger.

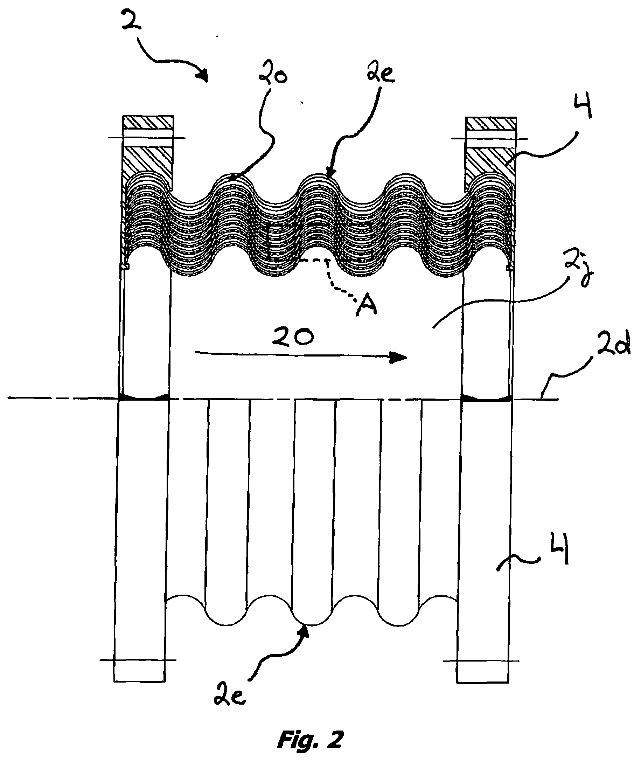

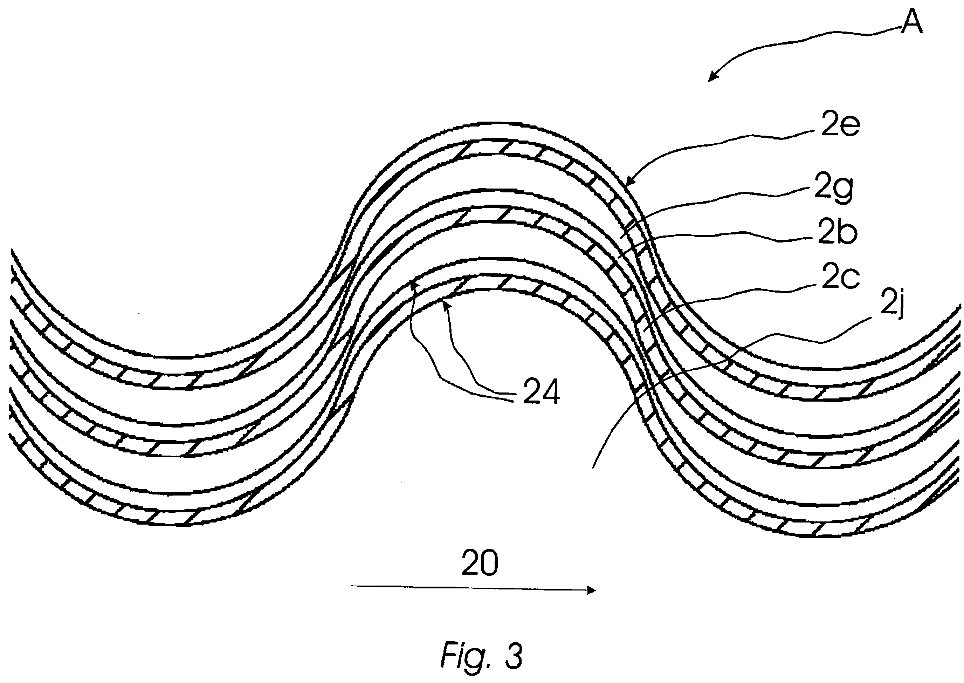

Figure 2 illustrates in a longitudinal section view an exemplary embodiment of a bellows equipment 2 according to the present invention. The outer dimensions of the bellows 2 are still substantially cylindrical of general shape and essential changes in the scale of the dimensions are neither necessary. The major modifications are focused on the inner surface arrangement of the bellows which becomes more evident in Figure 3 depicting a partial longitudinal section of the bellows 2. The principal construction of the bellows 2 consists of flanges 4 at the ends of the bellows and the actual bellows section there between forming a channel 2j for the exhaust gas stream 20 to flow through.

The inner surfaces of said shell 2e is comprised of several layers 2b, 2c such that at least one flow channel 2g is formed between the layers 2b, 2c. The multilayered design of its shell 2e becomes more illustrated in Figure 3 presenting in a close-up view of area A of Fig. 2. The modified design of the shell 2e brings forth for one the new main features of the bellows. The shell 2e of the bellows 2 has been established by placing at least two different types of laminar structures 2b, 2c on top of each other alternately such that a space 2g of predetermined size is formed between two consecutive sets of layers 2b, 2c.

In this case every second plate is a mesh or netlike sheet structure, where openings of suitable type cover most of the total surface area. Every second layer is established by a sheet of metal respectively. Various combinations are possible of course. It is obvious that the number of different types of sheets or mesh type configurations is either not limited. Several types of sheets and mesh or nets can be used. Essential is to obtain an abundant total surface within the shell 2e as well as flow channels 2j for the exhaust gases to flow through.

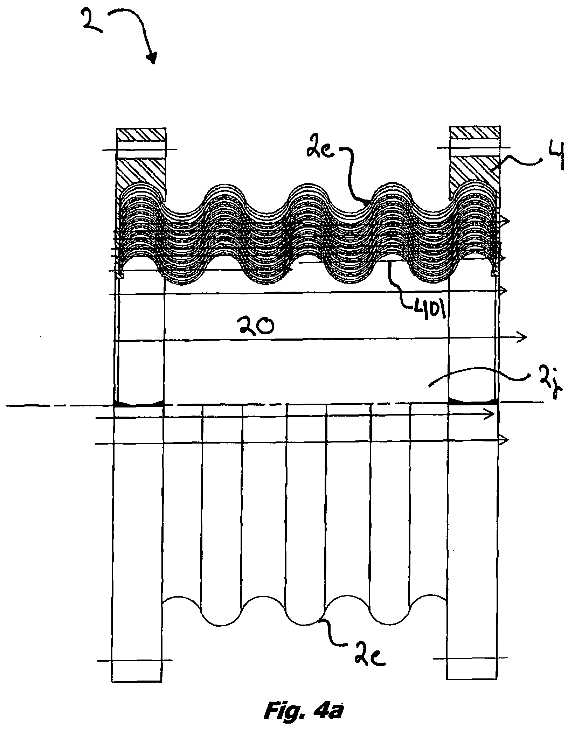

The main shape of a single space 2g between the layers resembles mainly a sleeve as it extends parallel to the main axis 2d of the bellows 2 and forms an additional flow channel for the exhaust gases 20. That is to say, the exhaust gases are able to flow within the space 2g mainly parallel both to the plane determined by the layers 2b, 2c and the central axis 2d of the bellows. The kind of embodiment of the invention becomes apparent in Figure 4a. The flow of exhaust gas is illustrated with arrows 201.
In addition to the new construction of the shell 2e, the abundant surfaces of layers 2b, 2c determined thereby are coated with suitable substances in order to produce a catalytic behaviour of the surfaces in relation to nitrogen oxides included in the exhaust gases. One or several layers of coating 24 are applied on the inner surfaces 6 of the bellows 2 exposed to exhaust gas 20. There are a number of different prior art techniques as listed previously for applying the coating onto the surfaces within the bellows.

However, according to a preferable embodiment of the invention, thermal spraying technique is utilized for this purpose. The catalytic activity and effectiveness of the coating can be adjusted among others by controlling some major variables such as coating thickness, particle size, use of different active metal particles and different substrate materials (ceramic, metal etc). The spraying is further optimized in order to obtain sufficient porosity of the catalyst material for further boosting its performance.

This further increases firstly the surface area, which is both covered by catalytic coating and eventually exposed to the exhaust gases. Secondly, it also increases the residence time of exhaust gases within the whole bellows 2. The combination of a multilayered shell 2e with several layers 2b, 2c and flow channels 2g there between and suitable coating of the surfaces, provides the new bellows equipment essentially more contact and reactions between the catalytic substance and exhaust stream while flowing through the bellows. This in turn increases the catalytic performance capacity of the bellows.

Basically any suitable coating known in the art can be used with the invention. Composition of the coating provided therein may, for example consist of aluminium oxide (Al2O3), silica / silicon dioxide (SiO2), silica/alumina mixed oxide (Al2O3/SiO2), TiO2 anatase or TiO2 rutile, anatase crystal form more active, zirconium oxide (ZrO2) or similar.

Next we take a look at the structure of the shell section 2e from the standpoint of view of manufacture. The following applies on a simple embodiment with just two different sheet materials forming the main layers of the shell.

According to yet another embodiment of the invention, the shell section 2e of the bellows is accomplished firstly simply by roll forming or roll profiling. Two separate metal sheets or webs are rolled out from two reels. The sheets of materials are then processed by cold deformation consisting of passing sheets of sheet metal through suitably shaped rollers. The rollers are arranged sequentially one after another with the purpose of making the sheet metal itself take up the desired shape or section and obtaining desired end total thickness. Metal sheet is then creped so to speak to have a relief surface with tiny wrinkles. It should be emphasized that any kind of sheet or web type material such as net, mesh or porous or alike foraminated material can be used to form one or several layers 2b, 2c of the shell section 2e. Both coated and clean surfaces can be used as well. Additional means can also be used to ensure a desired distance between adjacent layers to form passages for exhaust gas to flow through.

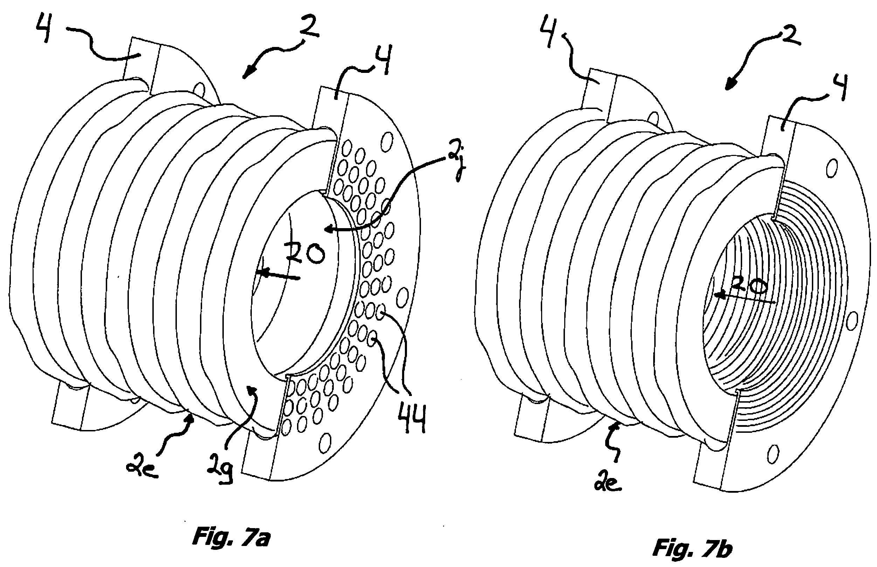

Furthermore, a few more rounds of thinner metal sheet or alike essentially impermeable layers of material are rolled up around the inner layers 2b, 2c of the shell to establish an outer surface 2o for the shell section 2e. Finally suitable flanges 4 are attached to the ends. The flanges 4 are provided with suitable receiving and fixing means for the shell. In Figures 7a and 7b both the bellows 2 and the flanges 4 on both ends of the bellows are presented in a perspective view. The flanges 4 provide both mountings for the actual bellows element, i.e. the shell 2e, as well as a supporting structure for it. The flanges 4 are made preferably by welding from two halves.

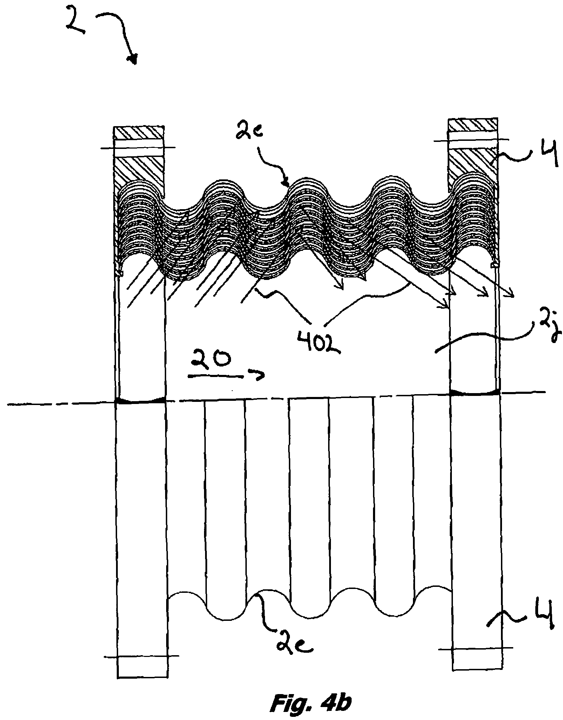

Figures 7a and 7b depicts a couple of different embodiments of the flanges 4. Flanges in figure 7a are provided with openings 44 for directing a part of the exhaust gas flow 20 through the flange and into channels formed between layers. The openings 44 open out into the distribution volumes or spaces 2g in the shell structure 2e. In this way it is possible to direct the reductant 14 specifically to the catalytic surfaces of the bellows 2 such that preliminary catalytic reactions are effectively actuated. The size or form of openings may be provided with holes, grid or supporting bars. Figure 7b illustrates embodiment of figures 2 and 4b. In fig 4b, the travel of exhaust gas through layers 2b, 2c is denoted with reference number 402.

### A few other embodiments of the invention

According to another embodiment of the invention, it is possible to arrange suitable perforations or suchlike openings also through the continuous and imperforated metal sheet 2b such that the exhaust gas is able to flow through both the metal sheets 2b and the mesh 2c. The additional perforations in the metal sheets 2b makes it, thus, possible for gases to flow also radially relative to the central axis 2d of the bellows 2. In this way the exhaust gases are able to find ever more routes to flow through within the bellows 2 and especially in its shell structure 2e. This comes more apparent in Figure 4b, as illustrated with arrows 402.

It is also preferable to arrange means for ensuring proper conditions around the injection of reductant agent. When injecting reductant agent directly on to the surface of the hydrolysis catalyst, the temperature should namely lie on a suitable level. Otherwise the reductant will stick onto the surface, and form clogging eventually. The surface temperature of the hydrolysis catalyst should normally be above about 300°C, more preferably above 350°C, and most preferably above 380°C. In case the temperature tends to drop below this limit, some additional measures can be considered for ensuring proper circumstances for the catalytic means.

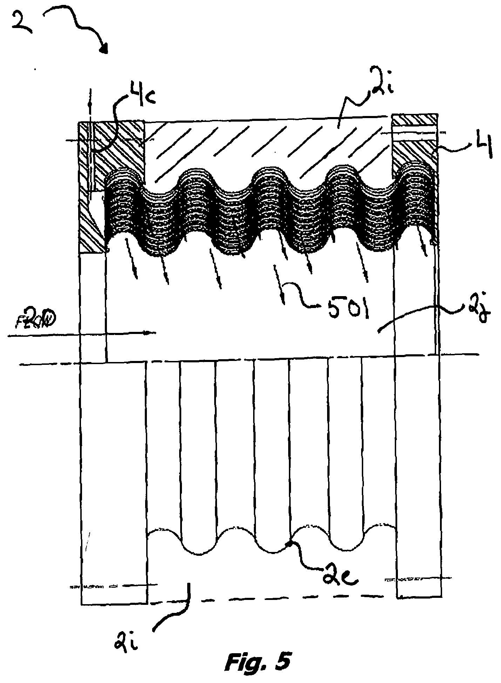

As it becomes apparent in Figure 5, suitable insulation of prior art 2i can be arranged around the shell element 2e for reducing heat losses through the shell 2e. Additional heating source of prior art can be provided as well, such as electrical heating means for small size bellows or burner applications.

An additional gaseous injection can be utilized as well. As illustrated by reference 4c in Figure 5 depicting an additional passage can be used for this purpose. The same passage 4c can also be used for bringing the reductant into the gas stream. The passages 4c within the flange 4 can be utilized for supplying the reductant 14 or mixture gas for the reductant - gas or exhaust gas - prior to mixing it with the main exhaust gas flow 20. The injected substance flows through the shell 2e and channels 2g therein and empties on to the main channel 2j as shown by arrows 501. The passages can be used, of course, together with the openings 44 (shown in Figure 7a) for mixing the reductant with the gas flow and further to direct the mixture into the shell structure 2e. The gas flow eventually mixes with the main exhaust gas flow 20.

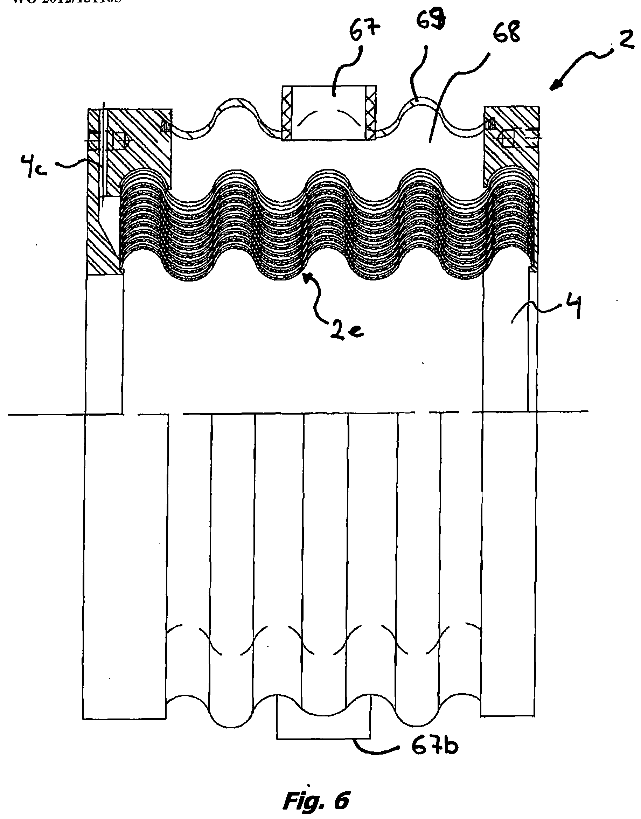

In addition, yet another embodiment of the invention is presented in Figure 6. The bellows 2 is provided there with an additional casing 69 or alike with a cylinder type shape such that an enclosure 68 is formed around the actual shell section 2e. Suitable gas is directed to the enclosure via an inlet 67 arranged therein.

The inlet 67 can be used also for providing additional heating into the bellows 2. The gas fed through the inlet 67 is preferably warmed up in order to ensure an adequate temperature level within the catalytic surfaces of the bellows 2. Gas is led out of the bellows via outlet 67b. According to this embodiment, the gas volume within the enclosure 68 serves as an insulation for the shell section 2e.

A flange 4 closer to engine may also be provided with a inner sleeve (not disclosed) extending towards other flange for example guiding the exhaust gas from the engine such that injection from means 4c or 67 can executed with less pressure.

One exemplary method according to the invention is a method for manufacturing a bellows device 2 to improve emission reduction of internal combustion engines. Said bellows device 2 is being configured to be connected in an exhaust gas line between a combustion chamber 8 and an exhaust pipe 12 of said internal combustion engine. Said bellows comprises an essentially cylindrical shell 2e, in which the exhaust gas flow 20 is guided to flow through. This method comprises following steps: a coating 24 of suitable substances is applied on the surfaces of the sheet materials 2b, 2c, a desired set of various sheets materials 2b, 2c are set on top of each other to obtain a respectively layered structure, said set of sheets material are machined by roll forming for obtaining desired topography of the surface of the sheets materials 2b, 2c, and machined sheets materials are rolled up to into a roll to obtain multilayered structure of the said shell structure 2e. Said coating 24 can be carried out by thermal spraying. Further in this method can be accomplished a multilayered structure of the shell 2e by rolling the sheet materials 2b, 2c up by multiple revolutions into a spiral roll.

It will be appreciated by a person skilled in the art that the invention is not limited to the embodiments described above, but may vary within the scope of the appended claims. For instance, features of the different embodiments can be combined.

## Claims

1. A bellows (2) for guiding exhaust gas flow (20) from the combustion chamber of an internal combustion engine (8) to an exhaust pipe (12), said bellows (2) comprising flanges (4) at the ends of the bellows, for connecting the bellows (2) into exhaust gas flow line (20b) between the internal combustion engine (8) and the exhaust pipe (12), and a shell section (2e) between the flanges (4), **characterized in that** the shell (2e) is comprised of several layers (2b, 2c) and that a catalytic type coating (24) has been applied on one or more layers (2b, 2c) of the shell (2e).

2. A bellows (2) according to claim 1, **characterized in that** at least one flow channel (2g) for the exhaust gas (20) is formed between the layers (2b, 2c).

3. A bellows according to claim 2, **characterized in that** the flanges (4) are provided with openings (44) to guide a part of the exhaust gas flow (20) into said flow channel (2g).

4. A bellows according to any of claims 1-3, **characterized in that** at least one of the layers (2b, 2c) is provided with openings for the exhaust gas (20).

5. A bellows according to claim 1, **characterized in that** the bellows (2) has been provided with means (4c, 67) for bringing reductant (14) into the exhaust gas flow (20).

6. A bellows according to claim 1, **characterized in that** one of the flanges is provided with means (4c) for bringing reductant (14) into the exhaust gas flow (20).

7. A bellows according to claim 1, **characterized in that** the shell (2e) is provided with means (67) for bringing reductant (14) into the exhaust gas flow (20).

8. A bellows according to claim 1, **characterized in that** the shell (2e) comprises a distribution volume between outer layer (2o) and inner layers (2b, 2c) of the shell (2e).

9. A bellows according to claim 8, **characterized in that** an insulation part (2i) is provided on the outer layer (2o) of the shell (2e).

10. A system comprising an internal combustion engine (8) connected to an exhaust pipe (12), **characterized in that** at least one connection in exhaust gas line is established with a bellows (2) according to any of the claims 1-9.

11. A system according to claim 10, **characterized in that** the bellows (2) is located in exhaust gas line upstream a supercharger.

12. A system according to claim 10, **characterized in that** the bellows (2) is located in exhaust gas line between the turbines of a two-stage supercharger.

13. A method to improve emission reduction of an internal combustion engine, wherein an exhaust gas flow (20) is guided from a combustion chamber (8) to an exhaust pipe (12) via at least one bellows (2) according to any of the claim 1-9 for guiding exhaust gas flow (20) from the combustion chamber of an internal combustion engine (8) to the exhaust pipe (12), **characterized by** supplying reductant (14) into the exhaust gas flow (20) prior to or within said bellows (2).

14. A method according to claim 13, **characterized by** supplying reductant (14) into a flange (4) of the bellows (2).

15. A method according to claim 13 or 14, **characterized by** controlling temperature within the bellows (2) via connection (67) to a heat source.

16. A method as set forth in any of claims 13-15, **characterized by** supplying reductant (14) into the bellows (2) through layers (2b, 2c) provided with catalytic coating (24).

17. A method as set forth in any of claims 13-16, **characterized by** supplying reductant (14) into the bellows (2) as premixed with gas.

## Patentansprüche

1. Faltenbalg (2) zum Leiten eines Abgasstroms (20) von der Brennkammer einer Brennkraftmaschine (8) zu einem Abgasrohr (12), wobei der Faltenbalg (2) Flansche (4) an den Enden des Faltenbalgs zum Einbinden des Faltenbalgs (2) in eine Abgasstromleitung (20b) zwischen der Brennkraftmaschine (8) und dem Abgasrohr (12) und einen Hüllenabschnitt (2e) zwischen den Flanschen (4) umfasst, **dadurch gekennzeichnet, dass** die Hülle (2e) mehrere Schichten (2b, 2c) umfasst und dass auf eine oder mehrere Schicht (en) (2b, 2c) der Hülle (2e) eine katalytische Beschichtung (24) aufgebracht wurde.

2. Faltenbalg (2) nach Anspruch 1, **dadurch gekennzeichnet, dass** zwischen den Schichten (2b, 2c) mindestens ein Strömungskanal (2g) für das Abgas (20) ausgebildet ist.

3. Faltenbalg nach Anspruch 2, **dadurch gekennzeichnet, dass** die Flansche (4) mit Öffnungen (44) versehen sind, um einen Teil des Abgasstroms (20) in den Strömungskanal (2g) zu leiten.

4. Faltenbalg nach einem der Ansprüche 1-3, **dadurch gekennzeichnet, dass** mindestens eine der Schichten (2b, 2c) mit Öffnungen für das Abgas (20) versehen ist.

5. Faltenbalg nach Anspruch 1, **dadurch gekennzeichnet, dass** der Faltenbalg (2) mit Mitteln (4c, 67) zum Einbringen eines Reduktionsmittels (14) in den Abgasstrom (20) versehen wurde.

6. Faltenbalg nach Anspruch 1, **dadurch gekennzeichnet, dass** einer der Flansche mit Mitteln (4c) zum Einbringen eines Reduktionsmittels (14) in den Abgasstrom (20) versehen ist.

7. Faltenbalg nach Anspruch 1, **dadurch gekennzeichnet, dass** die Hülle (2e) mit Mitteln (67) zum Einbringen eines Reduktionsmittels (14) in den Abgasstrom (20) versehen ist.

8. Faltenbalg nach Anspruch 1, **dadurch gekennzeichnet, dass** die Hülle (2e) zwischen einer äußeren Schicht (2o) und inneren Schichten (2b, 2c) der Hülle (2e) ein Verteilungsvolumen umfasst.

9. Faltenbalg nach Anspruch 8, **dadurch gekennzeichnet, dass** auf der äußeren Schicht (2o) der Hülle (2e) ein Isolierteil (2i) vorgesehen ist.

10. System, das eine Brennkraftmaschine (8) umfasst, die mit einem Abgasrohr (12) verbunden ist, **dadurch gekennzeichnet, dass** in einer Abgasleitung mindestens eine Verbindung mit einem Faltenbalg (2) nach einem der Ansprüche 1-9 hergestellt ist.

11. System nach Anspruch 10, **dadurch gekennzeichnet, dass** der Faltenbalg (2) in der Abgasleitung einem Lader vorgeschaltet ist.

12. System nach Anspruch 10, **dadurch gekennzeichnet, dass** der Faltenbalg (2) in der Abgasleitung zwischen den Turbinen eines Zweistufenladers angeordnet ist.

13. Verfahren zur Verbesserung der Emissionsminderung einer Brennkraftmaschine, wobei ein Abgasstrom (20) von einer Brennkammer (8) zu einem Abgasrohr (12) geleitet wird, und zwar über mindestens einen Faltenbalg (2) nach einem der Ansprüche 1-9 zum Leiten eines Abgasstroms (20) von der Brennkammer einer Brennkraftmaschine (8) zu dem Abgasrohr (12), **gekennzeichnet durch** ein Zuführen eines Reduktionsmittels (14) in den Abgasstrom (20) vor dem oder innerhalb des Faltenbalg(s) (2).

14. Verfahren nach Anspruch 13, **gekennzeichnet durch** ein Zuführen eines Reduktionsmittels (14) in einen Flansch (4) des Faltenbalgs (2).

15. Verfahren nach Anspruch 13 oder 14, **gekennzeichnet durch** ein Regeln einer Temperatur innerhalb des Faltenbalgs (2) über eine Verbindung (67) mit einer Wärmequelle.

16. Verfahren nach einem der Ansprüche 13-15, **gekennzeichnet durch** ein Zuführen eines Reduktionsmittels (14) in den Faltenbalg (2) **durch** Schichten (2b, 2c) hindurch, die mit einer katalytischen Beschichtung (24) versehen sind.

17. Verfahren nach einem der Ansprüche 13-16, **gekennzeichnet durch** ein Zuführen eines Reduktionsmittels (14) in den Faltenbalg (2) vorgemischt mit Gas.

## Revendications

1. Soufflet (2) pour guider un flux de gaz d'échappement (20)) à partir de la chambre de combustion d'un moteur à combustion interne (8) vers un tuyau d'échappement (12), ledit soufflet (2) comprenant des brides (4) aux extrémités du soufflet, pour raccorder le soufflet (2) à la ligne de flux de gaz d'échappement (20b) entre le moteur à combustion interne (8) et le tuyau d'échappement (12) et une section de coque (2e) entre les brides (4), **caractérisé en ce que** la coque (2e) est constituée de plusieurs couches (2b,2c) et qu'un revêtement de type catalytique (24) a été appliqué sur une ou plusieurs couches (2b, 2c) de la coque (2e).

2. Soufflet (2) selon la revendication 1, **caractérisé en ce que** au moins un canal de flux (2g) pour le gaz d'échappement (20) est formé entre les couches (2b, 2c).

3. Soufflet selon la revendication 2, **caractérisé en ce que** les brides (4) sont pourvues d'ouvertures (44) pour guider une partie du flux de gaz d'échappement (20) dans ledit canal de flux (2g).

4. Soufflet selon une quelconque des revendications 1-3, **caractérisé en ce que** au moins une des couches (2b, 2c) est pourvue d'ouvertures pour le gaz d'échappement (20).

5. Soufflet selon la revendication 1, **caractérisé en ce que** le soufflet (2) a été pourvu de moyens (4c, 67) pour introduire un agent de réduction (14) dans le flux de gaz d'échappement (20).

6. Soufflet selon la revendication 1, **caractérisé en ce que** une des brides est pourvue de moyens (4c) pour introduire un agent de réduction (14) dans le flux de gaz d'échappement (20).

7. Soufflet selon la revendication 1, **caractérisé en ce que** la coque (2e) est pourvue de moyens (67) pour introduire un agent de réduction(14) dans le flux de gaz d'échappement (20).

8. Soufflet selon la revendication 1, **caractérisé en ce que** la coque (2e) comprend un volume de distribution entre une couche extérieure (20) et des couches intérieures (2b, 2c) de la coque (2e).

9. Soufflet selon la revendication 8, **caractérisé en ce que** une partie d'isolation (2i) est prévue sur la couche extérieure (2o) de la coque (2e).

10. Système comprenant un moteur à combustion interne (8) raccordé à un tuyau d'échappement (12), **caractérisé en ce que** au moins un raccordement dans la ligne de gaz échappement est établi avec un soufflet (2) selon une quelconque des revendications 1-9.

11. Système selon la revendication 10, **caractérisé en ce que** le soufflet (2) est situé dans une ligne de gaz d'échappement en amont d'un surcompresseur.

12. Système selon la revendication 10, **caractérisée en ce que** le soufflet (2) est situé dans une ligne de gaz d'échappement entre les turbines d'un surcompresseur à deux étages.

13. Procédé d'amélioration de la réduction d'émissions dans un moteur à combustion interne, dans lequel un flux de gaz échappement (20) est guidé à partir d'une chambre de combustion (8) vers un tuyau d'échappement (12) via au moins un soufflet (2) selon une quelconque des revendications 1-9 pour guider un flux de gaz d'échappement (20) de la chambre de combustion d'un moteur à combustion interne (8) vers le tuyau d'échappement (12), **caractérisé par** l'alimentation d'un agent de réduction (14) dans le flux de gaz échappement (20) avant ou à l'intérieur dudit soufflet (2).

14. Procédé selon la revendication 13, **caractérisé par** l'alimentation d'un agent de réduction (14) dans une bride (4) du soufflet (2).

15. Procédé selon la revendication 13 ou 14, **caractérisée par** la commande de la température à l'intérieur du soufflet (2) via un raccordement (67) à une source de chaleur.

16. Procédé selon une quelconque des revendications 13-15, **caractérisée par** l'alimentation d'un agent de réduction (14) dans le soufflet (2) à travers les couches (2b, 2c) pourvues d'un revêtement catalytique (24).

17. Procédé selon une quelconque des revendications 13-16, **caractérisée par** l'alimentation d'un agent de réduction (14) dans le soufflet (2) sous forme de prémélangée avec du gaz.
